## Europäisches Patentamt

## European Patent Office

## Office européen des brevets

(11) Veröffentlichungsnummer: **0 232 746**
**A2**

## (12) EUROPÄISCHE PATENTANMELDUNG

(21) Anmeldenummer: **87100573.2**

(22) Anmeldetag: **17.01.87**

(51) Int. Cl.⁴: **F25B 49/00 , F25B 15/02**

(30) Priorität: 24.01.86 DE 3602117
12.06.86 DE 3619735

(43) Veröffentlichungstag der Anmeldung:
**19.08.87 Patentblatt 87/34**

(84) Benannte Vertragsstaaten:
**AT BE CH DE ES FR GB GR IT LI LU NL SE**

(71) Anmelder: **Vinz, Peter, Dr.-Ing.**
**Paosostrasse 24a**
**D-8000 München 60(DE)**

(72) Erfinder: **Vinz, Peter, Dr.-Ing.**
**Paosostrasse 24a**
**D-8000 München 60(DE)**

(74) Vertreter: **Dickel, Klaus, Dipl.-Ing.**
**Julius-Kreis-Strasse 33**
**D-8000 München 60(DE)**

(54) **Verfahren und Einrichtung zur energiesparenden automatischen Einhaltung der Konzentration von verdampfenden Kältemittelgemischen.**

(57) Die Erfindung betrifft ein Verfahren zur energiesparenden automatischen Einhaltung der Konzentration von verdampfenden Kältemittelgemischen, insbesondere von wasserhaltigen Ammoniaklösungen in Verdampfern von Kältemaschinen und Wärmepumpen nach dem Absorptionsprinzip sowie verschiedene Ausführungsformen zur Realisierung des Verfahrens.

Möglich wird das Verfahren mit der gemeinsamen Nutzung des Verdampfungspotentials des Lösungsablaufs und des Kühlpotentials des Kaltdampfabflusses für die Unterkühlung des Kondensatzulaufs, bei der als Führungsgröße für die Prozeßautomatisierung die minimale Temperaturdifferenz zwischen dem unterkühlten, noch nicht entspannten Kondensatzulauf und dem siedenden Kältemittelgemisch im Verdampfer anfällt. Diese Temperaturdifferenz ist unabhängig vom Sättigungsdampfdruck des siedenden Kältemittelgemischs und kann an jedem Lastpunkt des Verdampfers über den Lösungsablauf energiesparend konstant gehalten werden.

Letztlich wird mit dieser Maßnahme die Konzentration des siedenden Kältemittelgemisches gehalten, und der Verdampfer arbeitet bei jeder Verdampfungstemperatur mit dem höchstmöglichen Sättigungsdampfdruck nahezu wie ein Einstoffverdampfer.

# Verfahren und Einrichtung zur energiesparenden automatischen Einhaltung der Konzentration von verdampfenden Kältemittelgemischen

Die Erfindung betrifft ein Verfahren und eine Einrichtung zur energiesparenden automatischen Einhaltung der Konzentration von verdampfenden Kältegemischen, insbesondere von wasserhaltigen Ammoniaklösungen in Verdampfern von Kältemaschinen und Wärmepumpen nach dem Absorptionsprinzip, wobei der Kondensatzulauf in den Verdampfer und der Lösungsablauf aus dem Verdampfer zum Absorber durch Mengenregelventile einstellbar sind und der aus dem Verdampfer abströmende Kaltdampf vor seinem Eintritt in den Absorber einen Kaltdampfkühler durchläuft, in dem der Kaltdampf erwärmt und das zum Verdampfer strömende Kondensat vor seiner Entspannung unterkühlt wird.

Wesentliche betriebstechnische Mängel resultieren bei derartigen Anlagen aus dem konzentrationsabhängigen Driften der Verdampfungstemperatur bei der isobaren Kältemittelgemischverdampfung. Ursächlich sind Konzentrationsverschiebungen im ausdampfenden Kältemittelgemisch, die letztlich auf den Massen- und Konzentrationsungleichgewichten der zu-und abgeführten Stoffströme des Verdampfers beruhen.

Bekanntermaßen kann das konzentrationsabhängige Driften der Verdampfungstemperatur mit einer Entwässerung des Verdampfers vermieden werden, wozu eine definierte Menge des siedenden Kältemittelgemischs flüssig aus dem Verdampfer als Lösungsablauf abgezogen wird und durch eine zusätzlich einzuspeisende, gleichgroße Kondensatmenge höherer Ammoniakkonzentration ersetzt wird. Dieser bedarfsgerechte Mengenstrom des Lösungsablaufs kann relativ einfach für jeden Lastpunkt des Kältemittelgemischverdampfers berechnet werden. Problematisch hingegen ist seine technische Realisierung, insbesondere bei veränderlichen Verdampfungsleistungen und Sättigungsdampfdrücken.

Es ist bekannt, die Entwässerung des Kältemittelverdampfers über ein manuell zu betätigendes Ventil vorzunehmen, daß in einer Verbindungsleitung zwischen dem Verdampfer und dem Absorber angeordnet ist und über das der Lösungsablauf aus dem Verdampfer entweder diskontinuierlich, bei Überschreitung einer bestimmten Siedepunkterhöhung oder aber kontinuierlich abfließend eingestellt werden kann. ( Handbuch der Kältetechnik, Bd. 7 Springerverlag 1959 S. 58).

Bei dieser manuellen Entwässerungseinrichtung ist allerdings eine bedarfsgerechte Bemessung des Lösungsablaufs nicht möglich. Während bei zu kleinem Lösungsablauf die Übertragungsleistung der Verdampfers trotz gleichbleibenden Verdampfungsdruckes sinkt, wird zu hohem Lösungsablauf auch ein Anteil nutzbaren Kältemittels aus dem Verdampfer abgezogen.

Ferner sind aus der Druckschrift DE OS 2044438 ein Verfahren und eine automatische Entwässerungseinrichtung bekannt, mit deren Hilfe die Entwässerung des Kältemittelverdampfers kontinuierlich und bedarfsangepaßt eingestellt werden kann, wodurch diese betriebstechnischen Mängel beseitigt werden.

Bei dieser automatischen Entwässerungseinrichtung wird als Regelgröße für den bedarfsgerechten Lösungsablauf entweder der Unterschied zwischen der Sättigungstemperatur des in den Verdampfer eintretenden entspannten Kondensatzulaufs und der Sättigungstemperatur des aus dem Verdampfer abzuführenden Lösungsablaufs genutzt oder aber der Unterschied zwischen dem Druck im Verdampfer und dem Druck des reinen Kältemittels in einem Referenzgefäß bei der Temperatur des abzuführenden Lösungsablaufs. Dieser Temperatur bzw. Druckunterschied wird mit der Reglereinrichtung im gesamten Betriebsbereich des Verdampfers auf einem vorgewählten Wert konstant gehalten.

Bei allen diesen Entwässerungseinrichtungen wird jedoch der Lösungsablauf aus dem Verdampfer ohne Nutzung seiner Verdampfungswärme über das manuell bzw. automatisch betätigte Lösungsablaufmengenregelventil in den Absorber geleitet und bedeutet damit für den Gesamtprozeß einen energetischen Verlust.

Die Erfindung soll das bessern. · Ihr liegt die Aufgabe zugrunde, eine automatische Entwässerungseinrichtung des Verdampfers zu realisieren, die bei allen Belastungen, Lastschwankungen und Änderungen der äußeren Bedingungen der Absorptionskältemaschine stets den bedarfsgerechten Lösungsablauf einstellt und darüber hinaus das Kühlpotential des Lösungsablaufs vollständig für die Unterkühlung des noch unter Verflüssigungsdruck stehenden Kondensatzulaufs nutzt und damit letztlich energieverlustfrei arbeitet.

Diese Aufgabe wird gemäß der Erfindung durch die im Patentanspruch 1 angegebenen kennzeichnenden Merkmale gelöst.

Eine vorteilhafte Ausführung dieser energiesparenden, automatischen Konzentrationshaltung läßt sich gemäß den weiteren Erfindungsmerkmalen dadurch realisieren, daß kondensatzulaufseitig dem Kaltdampfkühler (4), ein Verdampfungskühler (5.1) parallel und ein Verdampfungskühler (5.2) in Reihe zugeschaltet ist und daß beide Verdampfungskühler (5.1, 5.2) von dem siedenden Lösungsablauf aus dem Verdampfer (1) durchströmt sind, wobei zwischen dem Verdampfer (1) und dem Verdampfungskühler (5.2) das Mengenregelventil (6) des Lösungsablaufs angeordnet ist, dessen Betätigung durch einen Regler (8) im Sinne einer minimalen Temperaturdifferenz zwischen dem unterkühlten, noch nicht entspannten Kondensatzulauf ($T_K$) und dem noch nicht erwärmten Kaltdampfabfluß ($T_V$) erfolgt.

Eine vorteilhafte weitere Ausführungsform ist gemäß den Erfindungsmerkmalen nach Anspruch 3, daß der siedende Lösungsablauf aus dem Verdampfer (1) zunächst den dem Kaltdampfkühler - (4) in Reihe vorgeschalteten Verdampfungskühler - (5.2) und danach den zum Kaltdampfkühler (4) parallelgeschalteten Verdampfungskühler (5.1) durchströmt, wobei der Kaltdampfkühler (4) und der parallelgeschaltete Verdampfungskühler (5.1) jeweils von Teilmengen, der nachgeschaltete Verdampfungskühler (5.2) hingegen von der Gesamtmenge des Kondensatzulaufs zum Verdampfer (1) durchströmt werden.

Eine für den Einsatz in Kälteanlagen bevorzugte Ausführungsform des Verfahrens ist gemäß den Erfindungsmerkmalen nach Anspruch 4, daß dem Kaltdampfkühler (4) ein Frischwasserkühler parallelgeschaltet ist, wobei alle parallelgeschalteten Kühler jeweils von einer Teilmenge der nachgeschaltete Verdampfungskühler (5.2) hingegen von der Gesamtmenge des Kondensatzulaufs durchströmt werden.

Bei der dieser Erfindung zugrundeliegenden verfahrenstechnischen Kombination erweist sich die minimale Temperaturdifferenz zwischen dem unterkühlten, noch nicht entspannten Kondensatzulauf und dem siedenden Kältegemisch im Verdampfer als geeignete Führungsgröße für die Konzentrationshaltung im Verdampfer, da diese Temperaturdifferenz unabhängig vom Sättigungsdampfdruck des siedenden Kältemittelgemischs ist und nur wenig von der Verdampferleistung abhängt. Solange sich die Unterkühlung des Kondensatzulaufs und das Verdampfungspotential des Lösungsablaufs die Waage halten, ist ihre Einstellung darüber hinaus energieverlustfrei.

Je nach apparativem Aufwand kann die reale minimale Temperaturdifferenz Werte zwischen 2 und 10 K annehmen. Ihre Messung und reglergerechte Aufbereitung ist kostengünstig und betriebssicher.

Die energieverlustfrei eingestellte minimale Temperaturdifferenz wird bei einem definierten, d.h. bedarfsgerechten Lösungsablauf aus dem Verdampfer erreicht. Dieser ist wiederum nur von der Größe der Kondensatunterkühlung abhängig und ändert sich mit derem Betrag; d.h., aus jedem bedarfsgerechten Lösungsablauf resultiert eine entsprechende Kältemittelgemischkonzentration im Verdampfer, die mit der minimalen Temperaturdifferenz gehalten wird.

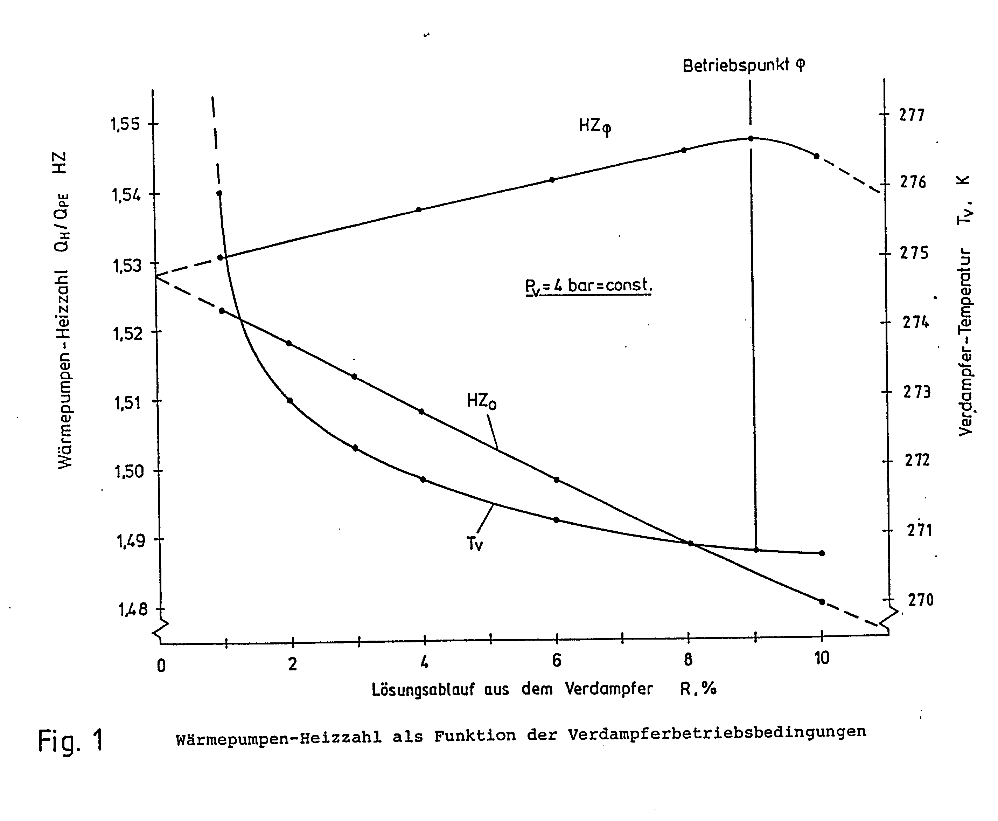

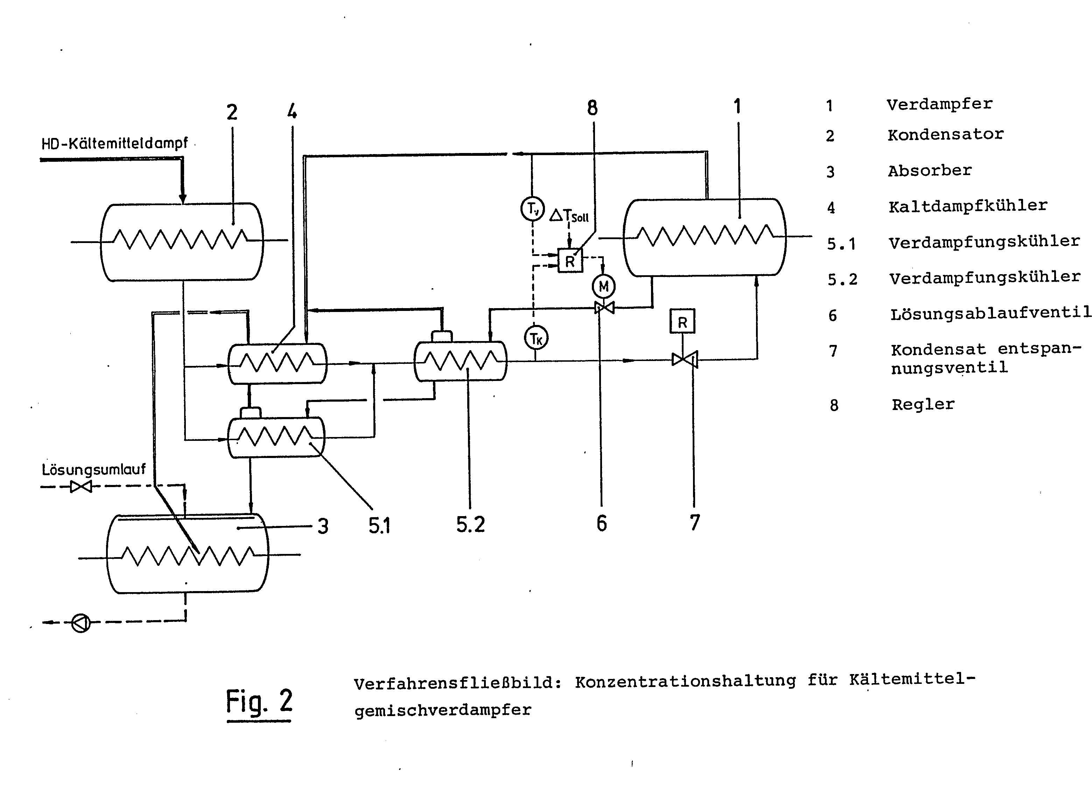

Die Erfindung wird anhand der Figuren 1 und 2 näher erläutert.

Figur 1 zeigt gemäß der Lehre der Erfindung den Verlauf der Heizzahl einer $NH_3$-Wasser-Absorptionswärmepumpe aufgetragen über den prozentualen Lösungsablauf aus dem Verdampfer, einmal mit($HZ_\varnothing$) und einmal ohne($HZ_o$)der zusätzlichen Nutzung des Verdampfungspotentials des Lösungsablaufs für die Kondensatunterkühlung.

Beide Kurvenzüge haben einen gemeinsamen Beginn, ihre Verläufe sind dagegen unterschiedlich. Während bei den heutigen Anlagen, d.h. bei der Nutzung nur des Kühlpotentials des Kaltdampfabflusses die theoretische Heizzahl erwartungsgemäß mit zunehmendem Lösungsablauf stetig abnimmt, steigt sie bei der zusätzlichen Nutzung des Verdampfungspotentials mit dem Lösungsablauf stetig an, bis die wärmeaustauschseitige Grenze, d.h. die minimale Temperaturdifferenz zwischen dem Kondensatzulauf und dem siedenden Kältemittelgemisch im Verdampfer erreicht ist. Bei einer weiteren Steigerung des Lösungsablaufs bleibt das überschüssige Verdampfungspotential ungenutzt, folglich muß die Heizzahl wieder abfallen. Am Betriebspunkt mit bedarfsgerechtem Lösungsablauf ist die Heizzahl mit zusätzlicher Nutzung des Verdampfungspotentials um 4 % höher als die mit herkömmlicher Kondensatunterkühlung.

Ergänzend hierzu zeigt Figur 1 auch den Verlauf der Siedetemperatur $T_V$ bei konstantem Verdampferdruck, aufgetragen über dem prozentualen Lösungsablauf. Und hier zeigt sich ein weiterer Vorteil der Erfindung. Das Heizzahlenmaximum wird nämlich bei der für diesen Verdampferdruck minimal möglichen Siedetemperatur erreicht. Oder umgekehrt und allgemeingültig ausgedrückt, bei jeder beliebig vorgegebenen Verdampfungstemperatur stellt sich mit dem Heizzahlenmaximum auch der betriebsgünstigste Sättigungsdampfdruck im Verdampfer ein. Dieses Verhalten erweist sich als besonders günstig für Wärmepumpen, deren Heizwassertemperaturen bekanntlich sehr empfindlich auf Druckreduzierungen im Kältemittelgemischverdampfer reagieren.

Figur 2 zeigt ein Ausführungsbeispiel des Verfahrens für eine Ammoniak/Wasser-Absorberwärmepumpe. Hierbei erweist es sich als vorteilhaft, wenn der Verdampfungskühler auf zwei Verdampfungskühler (5.1, 5.2) mit bedarfsangepaßten Wärmeaustauschflächen aufgeteilt wird, wobei gemäß Figur 2 der Verdampfungskühler -

(5.1) kondensatseitig parallel zum Kaltdampfkühler (4) und der Verdampfungskühler (5.2) nach der Zusammenführung der vorgekühlten Teilströme in den Kondensatzulauf geschaltet wird.

Der siedende Lösungsablauf des Kältegemischverdampfers (1) wird über das Mengenregelventil (6) zunächst in den Verdampfungskühler (5.2) geleitet und in diesem teilverdampft. Der Lösungsablauf gelangt anschließend in den Verdampfungskühler (5.1) und wird in diesem weitestgehend ausgedampft, nur ein Restlösungsstrom von weniger als 0,5 % gelangt schließlich nahezu mit Absorberlösungskonzentration in den Absorber (3).

Die Abdampfmengenströme des Kältegemischverdampfers (1) und des Verdampfungskühlers (5.2) werden dem Kaltdampfkühler (4) zugeführt und in dessen Mantelraum im Gegenstrom zum Teilstrom des Kondensatzulaufs geführt. Der Abdampf des Verdampfungskühlers (5.1) kann entweder direkt dem Absorber (3) zugeführt oder aber zusätzlich in den Kaltdampfkühler (4) eingespeist werden.

Mit dieser Wärmetauscherschaltung kann der Kondensatzulauf vor seiner Druckreduzierung im Kondensatentspannungsventil (7) bis auf eine minimale Resttemperaturüberhöhung von 4-5 K bezogen auf die Siedetemperatur des Kältemittelgemischs im Verdampfer (1) abgekühlt werden.

An den beiden Temperaturmeßstellen $T_V$ und $T_K$ wird die Temperaturdifferenz zwischen dem Kondensatzulauf vor dem Entspannungsventil (7) und dem aus dem Kältegemischverdampfer (1) abströmenden Kaltdampf gemessen. Diese Temperaturdifferenz soll mit dem Regler (8) über den Mengenstrom am Lösungsablaufventil (6) über den gesamten Teillastbereich des Verdampfers minimal gehalten werden.

Das Grundprinzip dieser Regelung gilt im gleichen Umfang für Absorptionswärmepumpen wie für Absortionskälteanlagen. Bei wassergekühlten Kälteanlagen kann allerdings mit der kondensatseitigen Parallelschaltung eines zusätzlichen Frischwasserkühlers eine Reduzierung des Lösungsablaufs erzielt werden und damit das Wärmeverhältnis darüber hinaus verbessert werden.

**Ansprüche**

1. Verfahren zur energiesparenden automatischen Einhaltung der Konzentration von verdampfenden Kältemittelgemischen, insbesondere, von wasserhaltigen Ammoniaklösungen in Verdampfern von Kältemaschinen und Wärmepumpen nach dem Absorptionsprinzip, wobei der Kondensatzulauf in den Verdampfer und der Lösungsablauf aus dem Verdampfer zum Absorber durch Mengenregelventile einstellbar sind und der aus dem Verdampfer abströmende Kaltdampf vor seinem Eintritt in den Absorber einen Kaltdampfkühler durchläuft, in dem der Kaltdampf erwärmt und das zum Verdampfer strömende Kondensat vor seiner Entspannung unterkühlt wird,

dadurch gekennzeichnet,

daß der Lösungsablauf aus dem Verdampfer vor dem Eintritt in den Absorber mittels Beheizung durch den Kondensatzulauf weitestgehend ausgedampft wird, daß die Temperatur des unterkühlten, noch nicht entspannten Kondensatzulaufs zum Verdampfer und die Siedetemperatur des Kältemittelgemischs im Verdampfer gemessen werden und das Mengenregelventil des Lösungsablaufs im Sinne einer minimalen Differenz zwischen diesen beiden Temperaturen automatisch gesteuert wird.

2. Vorrichtung zur Durchführung des Verfahrens nach Anspruch 1, dadurch gekennzeichnet, daß kondensatzulaufseitig dem Kaltdampfkühler (4) ein Verdampfungskühler (5.1) parallel und ein Verdampfungskühler (5.2) in Reihe zugeschaltet ist und daß beide Verdampfungskühler (5.1, 5.2) von dem siedenden Lösungsablauf aus dem Verdampfer (1) durchströmt sind, wobei zwischen dem Verdampfer (1) und dem Verdampfungskühler (5.2) ein Mengenregelventil (6) angeordnet ist, dessen Betätigung durch einen Regler (8) im Sinne einer minimalen Temperaturdifferenz zwischen dem unterkühlten und noch nicht entspannten Kondensatzulauf ($T_K$) und dem noch nicht erwärmten Kaltdampfabfluß ($T_V$) erfolgt.

3. Vorrichtung nach Anspruch 2, dadurch gekennzeichnet, daß der siedende Lösungsablauf aus dem Verdampfer (1) zunächst den dem Kaltdampfkühler (4) in Reihe vorgeschalteten Verdampfungskühler (5.2) und danach den zum Kaltdampfkühler (4) parallelgeschalteten Verdampfungskühler (5.1) durchströmt, wobei der Kaltdampfkühler (4) und der parallelgeschaltete Verdampfungskühler (5.1) jeweils von Teilmengen, der nachgeschaltete Kühler (5.2) hingegen von der Gesamtmenge des Kondensatzulaufs zum Verdampfer (1) durchströmt werden.

4. Vorrichtung nach Anspruch 2 oder 3, dadurch gekennzeichnet, daß dem Kaltdampfkühler (4) ein Frischwasserkühler parallelgeschaltet ist, wobei alle parallelgeschalteten Kühler jeweils von einer Teilmenge des Kondensatzulaufs der nachgeschaltete Verdampfungskühler (5.2) hingegen von der Gesamtmenge des Kondensatzulaufs zum Verdampfer (1) durchströmt werden.

Fig. 1    Wärmepumpen-Heizzahl als Funktion der Verdampferbetriebsbedingungen

| | |
|---|---|
| 1 | Verdampfer |
| 2 | Kondensator |
| 3 | Absorber |
| 4 | Kaltdampfkühler |
| 5.1 | Verdampfungskühler |
| 5.2 | Verdampfungskühler |
| 6 | Lösungsablaufventil |
| 7 | Kondensat entspannungsventil |
| 8 | Regler |

**Fig. 2**   Verfahrensfließbild: Konzentrationshaltung für Kältemittel-gemischverdampfer

0 232 746